# EUROPÄISCHE PATENTSCHRIFT

(11) **EP 2 827 966 B1**
(45) Veröffentlichungstag und Bekanntmachung des Hinweises auf die Patenterteilung: **11.12.2024**
(21) Anmeldenummer: 13713825.1
(22) Anmeldetag: 25.03.2013
(51) Int. Cl.: B01D 46/00, B01D 46/10, F02M 35/024, B01D 46/24

(54) **FILTERELEMENT UND LUFTFILTER**
FILTER ELEMENT AND AIR FILTER
ELÉMENT FILTRANT ET FILTRE À AIR

(30) Priorität: 23.03.2012 DE 102012005732; 23.03.2012 DE 102012005731; 23.03.2012 DE 102012005734
(43) Veröffentlichungstag der Anmeldung: 28.01.2015
(73) Patentinhaber: MANN+HUMMEL GmbH, 71636 Ludwigsburg (DE)
(72) Erfinder: HASENFRATZ, Robert, 74523 Schwäbisch Hall (DE); WAGNER, Fabian, 72127 Kusterdingen (DE); RÖSGEN, André, 73630 Remshalden (DE); THALMANN, Christian, 67346 Speyer (DE); PFLÜGER, Frank, 74343 Sachsenheim (DE); BLOSSEY, Werner, 71726 Benningen (DE); NEEF, Pascal, 78647 Trossingen (DE); RIEGER, Mario, 71638 Ludwigsburg (DE); DONAUER, Nadine, 70736 Fellbach (DE); WEBER, Andreas, 71691 Freiberg (DE)
(86) Internationale Anmeldenummer: PCT/EP2013/056223
(87) Internationale Veröffentlichungsnummer: WO 2013/139992

(56) Entgegenhaltungen:
- WO-A1-2006/076479
- WO-A1-2013/104794
- WO-A2-2004/071616
- WO-A2-2004/071616
- US-A- 4 925 469
- US-A- 4 925 469

## Beschreibung

### Technisches Gebiet

Die Erfindung betrifft ein Filterelement, insbesondere Flachfilterelement, insbesondere eines Luftfilters, insbesondere einer Brennkraftmaschine, insbesondere eines Kraftfahrzeugs, mit einem Filterbalg, an dem wenigstens ein Abstützelement angeordnet ist zum Abstützen des Filterelements gegen ein Filtergehäuse, in dem das Filterelement angeordnet werden kann.

Ferner betrifft die Erfindung einen Luftfilter, insbesondere einer Brennkraftmaschine, insbesondere eines Kraftfahrzeugs, mit einem Filtergehäuse, das einen Gehäuseinnenraum, wenigstens einen Einlass für zu reinigende Luft und wenigstens einen Auslass für gereinigte Luft aufweist, und in dem Gehäuseinnenraum das erfindungsgemässe Filterelement so angeordnet ist, dass es den wenigstens einen Einlass von dem wenigstens einen Auslass trennt, wobei das Filterelement einen Filterbalg umfasst, an dem wenigstens ein Abstützelement angeordnet ist zum Abstützen des Filterelements gegen das Filtergehäuse.

### Stand der Technik

Aus der GB 1 446 195 ist eine Luftfiltereinheit mit einem Filterelement und einem Seitenrahmen bekannt. Das Filterelement kann aus einem Filterpapier oder einem anderen geeigneten Material bestehen. Der Seitenrahmen umfasst einen Dichtungsring. Der Dichtungsring ist aus dem gleichen Material wie der Rest des Rahmens. Er ist integraler Bestandteil des Rahmens. An jeder der vier Seitenwände des Rahmens ist eine Mehrzahl von zylindrischen Vorsprüngen gebildet. Während des Betriebs ist die Luftfiltereinheit in einem Filtergehäuse angeordnet. Das Filtergehäuse umfasst zwei Gehäusehälften mit rechteckigem Querschnitt. Die Filtereinheit ist in einer Aufnahme im Filtergehäuse so eingesteckt, dass die Vorsprünge eine Stirnwand einer ersten der Gehäusehälften berühren. Die beiden Gehäusehälften werden mit Hilfe von Schnellbefestigungsmitteln zusammengehalten und gegen die Filtereinheit gehalten. Die Dichtung wird gegen die erste Gehäusehälfte gepresst. Die Vorsprünge entlang der vier Seitenwände des Rahmens gewährleisten eine korrekte Anordnung der Filtereinheit in dem Filtergehäuse.

Aus der WO2006/076479 A1 ist ein Luftfilter mit einem Filterelement bekannt, welches an einigen Kanten Abstützelemente aufweist, die das Filterelement im Filtergehäuse halten.

Der Erfindung liegt die Aufgabe zugrunde, ein Filterelement und einen Luftfilter der eingangs genannten Art zu gestalten, bei dem das Filterelement zuverlässiger und/oder positionsgenauer in dem Filtergehäuse gehalten werden kann. Insbesondere soll das Filterelement, insbesondere der Filterbalg, vor mechanischen Belastungen geschützt werden können.

### Offenbarung der Erfindung

Diese Aufgabe wird erfindungsgemäß durch ein Filterelement mit den Merkmalen des Anspruchs 1 gelöst.

Das wenigstens eine Abstützelement kann vorteilhafterweise an einer Außenseite, insbesondere einer Stirnseite, des Filterbalgs angeordnet sein. Die wenigstens eine Kante des Filterbalges, in deren Bereich sich das wenigstens eine Abstützelement befindet, wird vorteilhafterweise von wenigstens zwei aneinander grenzenden Außenseiten des Filterbalges gebildet. Vorteilhafterweise überragt das wenigstens eine Abstützelement wenigstens eine der die wenigstens eine Kante bildenden Seiten außen am Filterbalg. Bei der wenigstens einen Kante kann es sich vorteilhafterweise um eine reale Kante, insbesondere eine Faltkante eines Filtermediums handeln, aus dem der Filterbalg gefaltet ist. Es kann sich auch um eine Kante handeln, welche durch Flächen gebildet wird, von denen wenigstens eine eine Seite des Filterbalg einhüllt oder die durch andere reale Punkte, Linien oder Kanten des Filterbalges, insbesondere Stirnkanten oder Faltkanten eines gefalteten Filterbalges, aufgespannt ist.

Vorteilhafterweise kann das wenigstens eine Abstützelement die wenigstens eine Kante umfassen oder einfassen. Das wenigstens eine Abstützelement kann sich über beide Seiten, insbesondere Flächen, erstrecken, die die wenigstens eine Kante bilden.

Erfindungsgemäss überragt das wenigstens eine Abstützelement den Filterbalg in einer radialen und einer axialen Richtung bezüglich einer Elementachse oder einer zur Elementachse parallelen Achse. Auf diese Weise kann das Filterelement entsprechend in radialer und/oder axialer Richtung bezüglich der Elementachse oder der parallelen Achse am Filtergehäuse abgestützt werden.

Das wenigstens eine Abstützelement kann den Filterbalg, insbesondere die wenigstens eine Kante, berühren. Das wenigstens eine Abstützelement kann auch zu dem Filterbalg beabstandet an der wenigstens eine Kante angeordnet sein. Das wenigstens eine Abstützelement kann auch indirekt mittels eines Verbindungsmittels, insbesondere einem Endkörper und/oder einem Verbindungskörper, mit dem Filterbalg verbunden sein. In diesem Fall kann das wenigstens eine Abstützelement so angeordnet sein, dass es den Filterbalg berührt, oder so, dass es in einem Abstand zu dem Filterbalg einem der wenigstens einen Kante angeordnet ist.

Das wenigstens eine Abstützelement kann an unterschiedlichen Stellen des Filterbalgs angeordnet sein.

Es können auch auf unterschiedlichen Ebenen des Filterbalgs unterschiedliche Abstützelemente angeordnet sein. Auf diese Weise kann auch bei einer komplexen Bauform des Filtergehäuses und/oder des Filterbalges eine gleichmäßige Abstützung des Filterelements im Filtergehäuse erfolgen.

Das wenigstens eine Abstützelement kann vorteilhafterweise so ausgestaltet sein, dass es eine Lagetoleranz des Filterelements im Filtergehäuse ausgleichen kann. Ferner kann das wenigstens eine Abstützelement mit schwingungsdämpfenden Eigenschaften ausgestattet sein. Auf diese Weise können insbesondere betriebsbedingte Schwingungen des Filtergehäuses auf das Filterelement, insbesondere den Filterbalg, gedämpft werden. So kann eine mechanische Belastung des Filterbalgs verringert werden. Die Standzeit des Filterbalgs kann dadurch verlängert werden.

Das wenigstens eine Abstützelement kann die wenigstens eine Kante des eingebauten Filterbalgs im Filtergehäuse schützen. Auf diese Weise kann verhindert werden, dass der Filterbalg, insbesondere das Filtermedium, aus dem das Filterbalg besteht, an dem Filtergehäuse reiben kann. Durch den Abrieb könnte der Filterbalg, insbesondere das Filtermedium, beschädigt werden.

Ferner kann mit dem wenigstens einen Abstützelement die wenigstens eine Kante des Filterbalgs beim Einbauvorgang in das Filtergehäuse geschützt werden. Das Filterelement kann vorteilhafterweise durch eine verschließbare Einbauöffnung eines Gehäuseteils eingeschoben werden. Beim Einschieben kann das wenigstens eine Abstützelement verhindern, dass die wenigstens eine Kante an dem Filtergehäuseteil reiben und dadurch beschädigt werden kann.

Beim Einbau des Filterelements in das Filtergehäuse kann das wenigstens eine Abstützelement vorteilhafterweise als Führung dienen. Eine derartige Führung vereinfacht den Einbau des Filterelements. Dies ist insbesondere bei Verwendung eines Filtergehäuses von Vorteil, dessen Innenquerschnitt sich von der Einbauöffnung in axialer Richtung bezüglich einer Gehäuseachse verjüngt.

Vorteilhafterweise kann das wenigstens eine Abstützelement auf der in Einbaurichtung des Filterelements vorderen Seite des Filterbalgs angeordnet sein oder gegenüber dieser Seite zumindest vorstehen. Auf diese Weise kann die Schutzfunktion und/oder die Führungsfunktion des wenigstens einen Abstützelements weiter verbessert werden.

Außerdem kann das wenigstens eine Abstützelement die wenigstens eine Kante beim Verpacken, bei der Lagerung und/oder bei einem Transport des Filterelements schützen. Das wenigstens eine Abstützelement kann das Filterelements bei einem Sturz insbesondere auf einen harten Boden schützen.

Vorteilhafterweise können an mehreren Kanten Abstützelemente und/oder an wenigstens einer Kante mehrere Abstützelemente angeordnet sein. Auf diese Weise kann die Abstützung und/oder die Schutzfunktion und/oder der Toleranzausgleich weiter verbessert werden. Ferner können so etwa auftretende mechanische Belastungen gleichmäßiger auf das Filterelement verteilt werden.

Das wenigstens eine Abstützelement ist getrennt von etwaigen Dichtungen des Filterelements.

Insbesondere kann das wenigstens eine Abstützelement selbst keine Dichtungsfunktion haben. Auf diese Weise kann das wenigstens eine Abstützelement unabhängig von einer entsprechenden Dichtfläche am Filterbalg positioniert werden. Das wenigstens eine Abstützelement kann so bezüglich seiner Abstützfunktion optimiert sein. Es kann an Stellen des Filtergehäuses angeordnet werden, die bezüglich der Abstützung und/oder des Bauraums geeignet sind. Außerdem kann eine Form des wenigstens einen Abstützelements und eine entsprechende Dimensionierung freier gewählt werden.

Insbesondere bei schweren Filterelementen und/oder Filterelementen, die ausgedehnt sind in Richtung einer Elementachse und die im Bereich eines axialen Endes im Filtergehäuse aufgehängt oder befestigt, wie dies insbesondere bei Flachfilterelement mit tiefen Falten der Fall ist, kann die Gefahr bestehen, dass die Filterelemente in dem Filtergehäuse um ihre Aufhängung oder Befestigung pendeln können. Das Pendeln kann zu einer Beschädigung des Filterbalgs führen. Ferner kann das Pendeln die Aufhängung oder Befestigung mechanisch belasten und gegebenenfalls beschädigen. Derartig große und/oder schwere Filterelemente werden insbesondere bei Nutzfahrzeugen, insbesondere Lastkraftwagen oder Bussen, verwendet. Mit dem wenigstens einen Abstützelement kann das Pendeln des Filterelements im Filtergehäuse verringert, vorzugsweise unterbunden, werden. Das wenigstens eine Abstützelement kann die Aufhängung oder Befestigung des Filterelements im Filtergehäuse mechanisch entlasten.

Vorteilhafterweise kann das wenigstens eine Abstützelement das Filterelement auf einer bezüglich einer Aufhängung oder eine Befestigung im Filtergehäuse gegenüberliegenden Seite abstützen. So kann ein Kippmoment des Filterelements im Filtergehäuse reduziert werden. Auf diese Weise kann eine mechanische Belastung auf das Filterelement, insbesondere den Filterbalg, verringert werden. Insbesondere bei großen Filterelementen können ohne die Verwendung des wenigstens einen Abstützelements Kippmomente auftreten, welche den Filterbalg beschädigen können.

Vorteilhafterweise können mehrere Abstützelemente auf bezüglich der Elementachse gegenüberliegenden Außenseiten des Filterbalgs angeordnet sein. Auf diese Weise kann das Filterelement auf gegenüberliegenden Seiten abgestützt werden und zwischen entsprechend gegenüberliegenden Wänden des Filtergehäuses festgeklemmt und gehalten werden.

Vorteilhafterweise kann das wenigstens eine Abstützelement modular an dem Filterbalg angeordnet sein. Insbesondere können mehrere Abstützelemente, welche sich in Größe und/oder Form unterscheiden können, wahlweise am Filterbalg montiert werden. Auf diese Weise kann ein und dasselbe Filterelement wahlweise in unterschiedlichen Filtergehäusen angeordnet werden. Durch entsprechende Wahl des wenigstens einen Abstützelements können etwaige Bauraumunterschiede ausgeglichen werden.

Vorteilhafterweise kann das wenigstens eine Abstützelement lösbar an dem Filterbalg angeordnet sein. Auf diese Weise kann das wenigstens eine Abstützelement entsprechend bei der Verwendung des Filterelements in einem anderen Filtergehäuse durch ein anderes, insbesondere größeres, kleineres und/oder anders geformtes Abstützelement ausgetauscht werden.

Vorteilhafterweise kann das wenigstens eine Abstützelement zusätzlich als Betätigungselement zur Betätigung eines Funktionsbauteils des Filtergehäuses, insbesondere eines Schalters oder einer Öffnung, ausgestaltet sein. Insbesondere kann das wenigstens eine Abstützelement mit einer Öffnung in einem Gehäuseboden, einem Wartungsschalter, einer Membran für einen Wasserablauf und/oder einer Warmluftansaugung zusammenwirken. Auf diese Weise kann auf ein zusätzliches Betätigungsbauteil verzichtet werden. Die Betätigung kann automatisch beim Einbau des korrekten Filterelements erfolgen.

Das wenigstens eine Abstützelement kann zusätzlich oder alternativ auch als Kodierelement wirken. Es kann so ausgestaltet sein, dass ein korrekter Einbau des Filterelements in das Filtergehäuse nur möglich ist, wenn das Filterelement mit dem zu dem Filtergehäuse passenden wenigstens einen Abstützelement ausgestattet ist.

Das wenigstens eine Abstützelement kann vorteilhafterweise ein flexibles Bauteil, insbesondere aus Gummi oder Elastomer, sein. Auf diese Weise kann ein Toleranzausgleich und/oder eine Schwingungsdämpfung verbessert werden. Das wenigstens eine Abstützelement kann separat hergestellt sein und nachträglich mit dem Filterbalg verbunden werden. Alternativ kann das wenigstens eine Abstützelement insbesondere nach einem Zweikomponentenspritzverfahren direkt oder indirekt mit dem Filterbalg verbunden werden.

Vorteilhafterweise kann das Filterelement ein Flachfilterelement sein. Das Flachfilterelement kann einen zu dem Filterbalg zickzackförmig gefaltetes Filtermedium umfassen. Bei Flachfilterelementen sind die Filtermedien nicht geschlossen, das heißt, Stirnfalten sind ebenso wie Stirnkanten nicht miteinander verbunden. Im Unterschied dazu sind bei Rundfilterelementen die Filtermedien geschlossen, das heißt ihre Stirnfalten sind miteinander verbunden. Die Stirnfalten sind die beiden äußeren Falten, an gegenüberliegenden Stirnseiten des Filterbalgs. Stirnränder sind die beiden freien Ränder des Filtermediums, welche entlang der Stirnfalten verlaufen und diese an den Stirnseiten des Filterbalgs begrenzen. Die Stirnkanten des Filterbalgs sind die beiden anderen freien Ränder des Filterbalges, die sich zwischen den Stirnrändern erstrecken und entsprechend der Faltung des Filterbalgs verlaufen. Die Faltkanten sind die Kanten, entlang denen das Filtermedium gefaltet ist. Bei einem zickzackförmig gefalteten, quaderförmigen Filterbalg sind die Stirnränder und die Faltkanten gerade und verlaufen parallel zueinander. Die Stirnkanten verlaufen zickzackförmig und senkrecht zu den Stirnrändern und den Faltkanten. Die Stirnkanten spannen jeweils eine Stirnkantenseite des Filterbalges auf.

Der Filterbalg hat die Form eines Polyeders. Vorteilhafterweise kann der Filterbalg würfelförmig, quaderförmig, pyramidal, prismatisch, keilartig oder dergleichen sein.

Der besseren Verständlichkeit wegen wird bei der vorliegenden Beschreibung von etwa quaderförmigen Flachfilterelementen eine Achse, die sich parallel zu den Faltkanten erstreckt, als x-Achse bezeichnet. Eine Achse des Flachfilterelements, die senkrecht zu der x-Achse und parallel zu Höhen der Falten verläuft, wird als z-Achse bezeichnet. Eine Achse die senkrecht zur x-Achse und senkrecht zur z-Achse verläuft, wird als y-Achse bezeichnet.

Vorteilhafterweise kann die Elementachse des Filterelements mit der z-Achse zusammenfallen. Vorteilhafterweise kann ein Einbau des Filterelements in das Filtergehäuse in Richtung der z-Achse erfolgen. Die Einbaurichtung kann so mit der z-Achse zusammenfallen. Vorteilhafterweise kann die Filterachse eine Anströmseite und eine Abströmseite des Filterelements kreuzen. Eine Hauptströmungsrichtung des zu filtrierenden Fluids durch den Filterbalg kann vorteilhafterweise parallel zur z-Achse verlaufen. Vorteilhafterweise kann einer Gehäuseachse des Filtergehäuses parallel zur z-Achse verlaufen. Insbesondere kann die Gehäuseachse axial zur Elementachse verlaufen.

Vorteilhafterweise kann der Filterbalg tiefe Falten aufweisen. Das bedeutet, dass bei einem quaderförmigen Filterbalg eine Ausdehnung in Richtung der z-Achse, welche der Faltenhöhe entspricht, größer ist als die Ausdehnung in Richtung der x-Achse und/oder in Richtung der y-Achse. Es können auch variable Faltenhöhen und/oder Faltenverläufe vorgesehen sein. Die Faltenhöhen und/oder Faltenverläufe können im Filterbalg entsprechend variieren.

Vorteilhafterweise kann das Filterelement in einem Luftfilter eines Nutzkraftfahrzeugs, insbesondere eines Lastkraftwagens, eines Busses, eines Baustellenfahrzeugs oder einer Landmaschine, angeordnet sein. Derartige Filterelemente können im Vergleich zu Filterelementen aus Personenkraftwagen größer dimensioniert sein.

Das wenigstens eine Abstützelement ist an einer Ecke des Filterbalges angeordnet.

Auf diese Weise kann das wenigstens eine Abstützelement mehrere Kanten des Filterbalgs, die sich in der Ecke treffen, schützen. Durch die Anordnung des wenigstens einen Abstützelements an der Ecke kann eine Abstützung sowohl in radialer, als auch in axialer bezüglich einer Elementachse Richtung erfolgen.

Vorteilhafterweise kann an gegenüberliegenden Ecken des Filterbalgs jeweils ein Abstützelement angeordnet sein. Auf diese Weise kann der Filterbalg gleichmäßiger abgestützt werden. Außerdem können so die Ecken besser gegen Beschädigung, insbesondere beim Herunterfallen des Filterelements und/oder beim Einbau des Filterelements in das Filtergehäuse, geschützt werden.

Ecken, an denen sich Abstützelemente befinden, können sich vorteilhafterweise bezüglich der Elementachse, insbesondere der z-Achse, gegenüberliegen. Auf diese Weise kann das Filterelement auf bezüglich der Elementachse radial gegenüberliegenden Seiten am Filtergehäuse abgestützt werden.

Alternativ oder zusätzlich können sich Ecken, an denen sich Abstützelemente befinden, bezüglich einer Ebene, die durch die Elementachse, insbesondere die z-Achse, und die x-Achse aufgespannt wird, und/oder einer Ebene, die durch die Elementachse, insbesondere die z-Achse, und die y-Achse aufgespannt wird, gegenüber liegen. Auf diese Weise kann das Filterelement entsprechend in Richtung der x-Achse und/oder in Richtung der y-Achse am Filtergehäuse abgestützt werden.

Vorteilhafterweise kann an allen in Einbaurichtung des Filterelements in das Filtergehäuse vorderen Ecken des Filterbalgs jeweils ein Abstützelement angeordnet sein. Auf diese Weise kann das Filterelement an seiner in Einbaurichtung vorderen Seite gleichmäßig geschützt und abgestützt werden. Ferner können die Abstützelemente auch als Führungselemente zur Verbesserung und/oder Vereinfachung des Einbaus des Filterelements im Filtergehäuse beitragen.

Bei einer weiteren vorteilhaften Ausführungsform kann das wenigstens eine Abstützelement alle an die wenigstens eine Kante, gegebenenfalls die Ecke, angrenzenden Seiten des Filterbalges überragen. Auf diese Weise kann der Filterbalg mit dem wenigstens einen Abstützelement in alle freien Richtungen geschützt und abgestützt werden.

Bei einer weiteren vorteilhaften Ausführungsform kann wenigstens ein Verbindungskörper, insbesondere ein Endkörper, wenigstens entlang der wenigstens einen Kante mit dem Filterbalg verbunden sein und das wenigstens eine Abstützelement kann an dem wenigstens einen Verbindungskörper direkt oder indirekt befestigt sein.

Der wenigstens eine Verbindungskörper kann vorteilhafterweise an einer bezüglich der Elementachse seitlichen Fläche oder einer vorderen Fläche angeordnet sein.

Der wenigstens eine Verbindungskörper kann vorteilhafterweise zur Stabilisierung und/oder Formgebung des Filterbalgs beitragen. Durch die Anordnung des wenigstens einen Abstützelements an dem wenigstens einen Verbindungskörper kann das Filterelement, insbesondere der Filterbalg, insbesondere bezüglich der Abstützung am Filtergehäuse mechanisch weiter entlastet werden. Eine Abstützkraft kann von dem Filtergehäuse über das wenigstens eine Abstützelement und den wenigstens einen Verbindungskörper gleichmäßiger und/oder großflächiger auf das Filterelement, insbesondere den Filterbalg, übertragen werden.

Der wenigstens eine Verbindungskörper kann vorteilhafterweise mittels Kleben, Schweißen oder nach einem Spritzgussverfahren mit dem Filterelement, insbesondere dem Filterbalg, verbunden sein. Der wenigstens eine Verbindungskörper kann auch an den Filterbalg angeschäumt oder aufgeschäumt sein. Er kann auch in einer mechanischen Weise, insbesondere mittels einer Rasteinrichtung oder einer Klemmeinrichtung, mit dem Filterelement, insbesondere dem Filterbalg, verbunden sein.

Der wenigstens eine Verbindungskörper kann sich wenigstens mit einer Seite entlang der Kante erstrecken, an der sich das wenigstens eine Abstützelement befindet. Vorteilhafterweise kann sich der wenigstens eine Verbindungskörper über wenigstens eine der Seiten des Filterbalgs erstrecken, welche die wenigstens eine Kante mit dem wenigstens einen Abstützelement mit bildet. Auf diese Weise wird das Filterelement, insbesondere der Filterbalg, an der entsprechenden Seite gleichmäßig abgestützt.

Der wenigstens eine Verbindungskörper kann ein Rahmen oder Teil eines Rahmens sein, welcher den Filterbalg wenigstens teilumfänglich umgeben kann.

Vorteilhafterweise kann der wenigstens eine Verbindungskörper wenigstens ein Befestigungsmittel aufweisen, mit dem das wenigstens eine Abstützelement verbunden sein kann. Vorteilhafterweise kann mit dem wenigstens einen Befestigungsmittel eine steckbare Verbindung, insbesondere einer Rastverbindung, realisiert werden. Mit einer steckbaren Verbindung kann einfach eine Kraftübertragung axial zu einer Steckrichtung der Verbindung realisiert werden. Vorteilhafterweise kann die Steckrichtung der Verbindung axial zu einer Abstützrichtung des wenigstens einen Abstützelements gegen das Filtergehäuse sein. Auf diese Weise kann die Abstützung weiter verbessert werden. Vorteilhafterweise kann die Steckrichtung parallel zu der Elementachse und/oder der Einbaurichtung des Filterelements im Filtergehäuse sein. Vorteilhafterweise kann das wenigstens eine Befestigungsmittel einen insbesondere pfeilartigen oder stiftartigen Vorsprung aufweisen, auf den das wenigstens eine Abstützelement gesteckt werden kann. Das wenigstens eine Abstützelement kann formschlüssig mit dem wenigstens einen Befestigungsmittel verbunden sein.

Das wenigstens eine Befestigungsmittel kann vorteilhafterweise an einer Ecke des wenigstens einen Verbindungskörpers angeordnet sein. Auf diese Weise kann das wenigstens eine Abstützelement einfach an einer entsprechenden Ecke des Filterbalgs montiert werden.

Das wenigstens eine Abstützelement kann lösbar oder unlösbar mit dem wenigstens einen Verbindungskörper verbunden sein.

Bei dem wenigstens einen Verbindungskörper kann es sich um einen kunststoffumspritzten Rahmen handeln. Das wenigstens eine Befestigungsmittel kann als Verlängerung des Rahmens ausgestaltet sein. Es kann einstückig mit dem Rahmen verbunden sein.

Bei dem Verbindungskörper kann es sich vorteilhafterweise um einen Endkörper handeln. Der Endkörper kann vorteilhafterweise den Filterbalg auf der entsprechenden Seite, auf der er angebracht ist, abdichten. Der Endkörper kann vorteilhafterweise an einer Stirnkantenseite eines gefalteten Filterbalgs angeordnet sein. Der wenigstens eine Endkörper kann als Endscheibe realisiert sein. Mittels der Scheibenform kann der Platzbedarf verringert werden. Vorzugsweise kann der scheibenförmige Endkörper aus einer Kunststoffhartkomponente hergestellt sein, aber auch alternativ oder ergänzend einen die zugeordnete Seite des Filterbalgs abdeckenden Vliesstreifen aufweisen.

Vorteilhafterweise kann das wenigstens eine Abstützelement auch indirekt an dem wenigstens einen Verbindungskörper befestigt sein.

Bei einer weiteren vorteilhaften Ausführungsform kann das wenigstens eine Abstützelement an einem Trägerkörper, insbesondere einem Trägergitter, befestigt sein, der mit dem wenigstens einen Verbindungskörper verbunden oder verbindbar sein kann. An dem Trägerkörper kann das wenigstens eine Abstützelement vormontiert werden. Das wenigstens eine Abstützelement kann mit dem Trägerkörper gemeinsam mit dem wenigstens einen Verbindungskörper verbunden werden. Auf diese Weise kann ein Montageaufwand verringert werden. Mit dem Trägerkörper kann das Filterelement, insbesondere der Filterbalg, zusätzlich stabilisiert werden. Der Trägerkörper kann fest mit dem wenigstens einen Verbindungskörper verbunden sein. Er kann auch lösbar mit dem wenigstens einen Verbindungskörper verbunden sein.

Vorteilhafterweise kann der Trägerkörper auf der in Einbaurichtung vorderen Seite des Filterbalgs angeordnet sein. Auf diese Weise kann der Trägerkörper den Filterbalg beim Einbau ins Filtergehäuse schützen.

Bei dem Trägerkörper kann es sich vorteilhafterweise um ein Trägergitter handeln. Das Trägergitter kann vorteilhafterweise für Fluid durchlässig sein. So kann das Trägergitter auch an einer Abströmseite oder einer Anströmseite des Filterbalgs angeordnet werden. Auf diese Weise können auch eine Anströmseite oder eine Abströmseite mit dem Trägergitter stabilisiert und/oder geschützt werden.

Der Trägerkörper kann vorteilhafterweise so ausgestaltet sein, dass er mit jeweiligen Abschnitten an mehreren Verbindungskörpern, welche sich an unterschiedlichen Seiten des Filterbalgs erstrecken können, befestigt werden kann.

Vorteilhafterweise kann der Trägerkörper zwischen zwei Endkörpern des Filterbalges angeordnet werden. Er kann jeweils an einer Seite mit dem entsprechenden Endkörper verbunden sein.

Vorteilhafterweise kann der wenigstens eine Trägerkörper entsprechende Befestigungsmittel, insbesondere Vorsprünge oder Aufsteckstifte, aufweisen zum Befestigen, insbesondere Aufstecken, des wenigstens einen Abstützelements.

Bei einer weiteren vorteilhaften Ausführungsform kann der Trägerkörper mittels einer steckbaren Verbindung, insbesondere einer Rastverbindung, mit dem wenigstens einen Verbindungskörper verbunden sein. Eine Rastverbindung kann einfach verbunden und gelöst werden. Auf diese Weise kann der Trägerkörper einfach mit dem wenigstens einen Verbindungskörper verbunden werden. Eine Rastverbindung ist darüber hinaus mechanisch stabil.

Vorteilhafterweise kann die Verbindung lösbar sein. Bei einem Austausch des Filterelements kann so der wenigstens eine Trägerkörper mit dem wenigstens einen daran befestigten Abstützelement von dem Filterbalg getrennt werden. Der Trägerkörper mit dem wenigstens einen Abstützelement kann wieder verwendet werden.

Der Trägerkörper kann auch als modulares Bauteil ausgestaltet sein. So können je nach Verwendung des Filterelements in unterschiedlichen Filtergehäusen unterschiedliche Trägerkörper verwendet werden.

Vorteilhafterweise kann das wenigstens eine Abstützelement mittels einer steckbaren Verbindung, insbesondere einer Rastverbindung, mit dem Trägerkörper verbunden sein. Mit einer steckbaren Verbindung kann einfach eine Kraftübertragung axial zu einer Steckrichtung der Verbindung realisiert werden. Vorteilhafterweise kann die Steckrichtung der Verbindung axial zu einer Abstützrichtung des wenigstens einen Abstützelements gegen das Filtergehäuse sein. Auf diese Weise kann die Abstützung weiter verbessert werden. Vorteilhafterweise kann die Steckrichtung parallel zu der Elementachse und/oder der Einbaurichtung des Filterelements im Filtergehäuse sein. So kann die Abstützfunktion weiter verbessert werden.

Gemäss der beanspruchten Erfindung ist eine bezüglich einer Elementachse umfangsmäßig verlaufende Dichtung zum Abdichten gegen das Filtergehäuse vorgesehen. Mit der Dichtung können eine Rohfluidseite und eine Reinfluidseite des Filterelements zuverlässig voneinander getrennt werden. So können der wenigstens eine Einlass und der wenigstens eine Auslass des Filtergehäuses zuverlässig voneinander getrennt werden.

Die Dichtung kann zusätzlich eine Haltefunktion aufweisen. Vorteilhafterweise kann die Dichtung an oder auf einer Dichtfläche des Filtergehäuses anliegen. Das Filterelement kann vorteilhafterweise mit der Dichtung in dem Filtergehäuse aufgehängt oder befestigt sein. Die Dichtfläche kann vorteilhafterweise in der Nähe der Einbauöffnung angeordnet sein.

Ferner ist das wenigstens eine Abstützelement an einer der Dichtung bezüglich der Elementachse axial gegenüberliegenden Seite des Filterbalges angeordnet.

So kann das Filterelement zuverlässig auf gegenüberliegenden Seiten einerseits mit der Dichtung und andererseits mit dem wenigstens einen Abstützelement abgestützt werden. So kann ein Pendeln des Filterelements im Filtergehäuse verhindert werden. Die mechanische Belastung auf das Filterelement, insbesondere den Filterbalg, kann so verringert werden. Gegebenenfalls kann der Trägerkörper auf der der Dichtung bezüglich der Elementachse axial gegenüberliegenden Seite des Filterbalgs angeordnet sein.

Vorteilhafterweise kann eine Ausdehnung des Filterelements in einer Ebene radial zu einer Einbaurichtung im Bereich des wenigstens einen Abstützelements geringer sein, als im Bereich der Dichtung. Auf diese Weise kann das Filterelement beim Einbau in das Filtergehäuse mit der Seite mit dem wenigstens einen Abstützelement voran, an einer entsprechenden Dichtfläche des Filtergehäuses für die Dichtung vorbei durch die Einbauöffnung geführt werden. Die vergleichsweise größere Dichtung kann an der Dichtfläche anliegen.

Darüber hinaus kann sich ein Gehäuseinnenraum des Filtergehäuses in Einbaurichtung verjüngen. Durch den entsprechend geringeren Außenquerschnitt des Filterelements auf der Seite mit dem wenigstens einen Abstützelement kann das Filterelement einfach in das Filtergehäuse eingebaut werden.

Untersuchungen haben ergeben, dass optimale Ergebnisse bezüglich des Abstützens und/oder des Einbaus erzielt werden können, wenn ein Verhältnis des Außenquerschnitts auf der Seite mit dem wenigstens einen Abstützelement zu dem Außenquerschnitt im Bereich der Dichtung abhängig von einem bezüglich der Elementachse axialen Abstand zwischen dem wenigstens einen Abstützelement und der wenigstens einen Dichtung vorgegeben wird.

Bei einer weiteren vorteilhaften Ausführungsform kann ein Abstützabstand in einer ersten radialen Ebene quer, insbesondere senkrecht, zur Elementachse zwischen radial äußeren Abstützabschnitten von zwei bezüglich einer axialen Ebene, in der die Elementachse liegt, gegenüberliegenden Abstützelementen, die sich bei eingebautem Filterelement radial zur Elementachse oder zu einer zur Elementachse parallelen Achse gegen das Filtergehäuse abstützen können, kleiner sein als ein Dichtabstand in einer zweiten, zur ersten radialen Ebene parallelen radialen Ebene zwischen zwei bezüglich der in der axialen Ebene gegenüberliegenden Dichtabschnitten der Dichtung, die bei eingebautem Filterelement gegen entsprechende Dichtungsflächen des Filtergehäuses abdichten können. Auf diese Weise kann die Abstützfunktion und die Kraftübertragung auf den Filterbalg verbessert werden.

Vorteilhafterweise kann der Abstützabstand um einen Wert kleiner sein, der abhängig von einem bezüglich der Elementachse axialen Abstand zwischen dem Abstützabschnitt und dem Dichtabschnitt auf der gleichen Umfangsseite des Filterbalges vorgegeben werden kann.

Vorteilhafterweise kann der Abstützabstand etwa dem Dichtabstand abzüglich zwischen etwa 2 % und 5 %, vorzugsweise 3,5 %, des vorzugsweise mittleren axialen Abstands zwischen den Abstützabschnitten und den Dichtabschnitten entsprechen. Auf diese Weise können optimale Ergebnisse bezüglich des Abstützens und der Kraftübertragung erreicht werden.

Die technische Aufgabe wird ferner erfindungsgemäß durch den Luftfilter dadurch gelöst, dass das wenigstens eine Abstützelement direkt oder indirekt an wenigstens einer Kante des Filterbalges angeordnet ist und den Filterbalg außen überragt.

Die oben im Zusammenhang mit dem erfindungsgemäßen Filterelement und dessen vorteilhaften Ausführungsformen aufgezeigten Vorteile und Merkmale gelten für den erfindungsgemäßen Luftfilter entsprechend und umgekehrt.

Vorteilhafterweise kann das Filtergehäuse eine verschließbare Einbauöffnung aufweisen, durch die das Filterelement in den Gehäuseinnenraum eingebracht werden kann.

Vorteilhafterweise kann ein Innenquerschnitt des Filtergehäuses auf der der Einbauöffnung bezüglich einer Gehäuseachse axial gegenüberliegenden Seite wenigstens abschnittsweise gegenüber einem Öffnungsquerschnitt der Einbauöffnung verjüngt sein.

Vorteilhafterweise können wenigstens zwei bezüglich der Gehäuseachse radial gegenüberliegende innere Umfangsseiten des Filtergehäuses aufeinander zu laufen.

Vorteilhafterweise kann das Filtergehäuse auf der der Einbauöffnung axial zu Gehäuseachse gegenüberliegenden Seite wenigstens einen Stützlager aufweisen, an dem sich das Filterelement mit dem wenigstens einen Abstützelement abstützen kann. Vorteilhafterweise kann wenigstens ein Stützlager an wenigstens einer radial inneren Umfangsseite des Filtergehäuses angeordnet sein.

Das wenigstens eine Stützlager kann vorteilhafterweise zur Abstützung axial zur Gehäuseachse, insbesondere axial zur Elementachse, geeignet sein. Alternativ oder zusätzlich kann das wenigstens eine Stützlager zur Abstützung radial zur Gehäuseachse, insbesondere zur Elementachse, oder zu einer Achse, die zur Gehäuseachse parallel ist, ausgestaltet sein. Das wenigstens eine Stützlager kann vorteilhafterweise an einer Seitenwand des Filtergehäuses angeordnet sein.

Mit dem wenigstens einen Stützlager kann eine Kraftübertragung zwischen dem Filtergehäuse und dem Filterelement in axialer und/oder radialer Richtung verbessert werden. Ferner kann mit dem wenigstens einen Stützlager eine Einbautiefe des Filterelements in das Filtergehäuse in Einbaurichtung begrenzt werden.

Vorteilhafterweise kann das wenigstens eine Stützlager als Kodierelement ausgelegt sein, welches zu dem wenigstens einen Abstützelement passt. So kann verhindert werden, dass ein Filterelement, welches nicht zu dem Filtergehäuse passt, in das Filtergehäuse eingebaut werden kann. Auf diese Weise kann eine Betriebssicherheit des Luftfilters verbessert werden. Vorteilhafterweise kann das wenigstens eine Stützlager wenigstens eine Positioniernoppe aufweisen, welche bei korrekt eingebautem Filterelement in eine entsprechende Positionieraufnahme des wenigstens einen Abstützelements eingreifen kann. Das wenigstens eine Stützlager kann ferner eine Lagerfläche aufweisen, an der das wenigstens eine Abstützelement anliegen kann.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch
- Figur 1: eine Explosionszeichnung eines Luftfilters mit einem Flachfilterelement eines Kraftfahrzeugs mit Merkmalen der beanspruchten Erfindung;
- Figur 2: eine Explosionszeichnung des Luftfilters aus der Figur 1 in einer anderen Perspektive;
- Figur 3: den geschlossenen Luftfilter aus den Figuren 1 und 2;
- Figur 4: eine Draufsicht des Luftfilters aus der Figur 3;
- Figur 5: einen querseitigen Längsschnitt des Luftfilters aus der Figur 4 entlang der dortigen Schnittlinie V-V;
- Figur 6: einen längsseitigen Längsschnitt des Luftfilters aus der Figur 4 entlang der dortigen Schnittlinie VI-VI;
- Figur 7: einen längsseitigen Längsschnitt des Flachfilterelements des Luftfilters aus der Figur 4 entlang der dortigen Schnittlinie VII-VII;
- Figur 8: einen Detailschnitt des Luftfilters aus der Figur 6 entlang der dortigen Schnittlinie VIII-VIII;
- Figur 9: einen Detailschnitt des Luftfilters aus der Figur 5 entlang der dortigen Schnittlinie IX-IX;
- Figur 10: eine Explosionsdarstellung eines Gehäusetopfs mit einem Flachfilterelement eines Luftfilters gemäß einem zweiten Ausführungsbeispiel, welcher zu dem Luftfilter aus den Figuren 1 bis 9 ähnlich ist;
- Figur 11: eine Detailansicht des Flachfilterelements aus der Figur 10;
- Figur 12: eine Explosionsdarstellung des Flachfilterelements aus den Figuren 10 und 11;
- Figur 13: einen längsseitigen Längsschnitt eines Luftfilters mit einem Flachfilterelement gemäß einem vierten Ausführungsbeispiels, welcher zu dem Luftfilter aus den Figuren 1 bis 9 und dem Luftfilter aus den Figuren 10 bis 12 ähnlich ist.

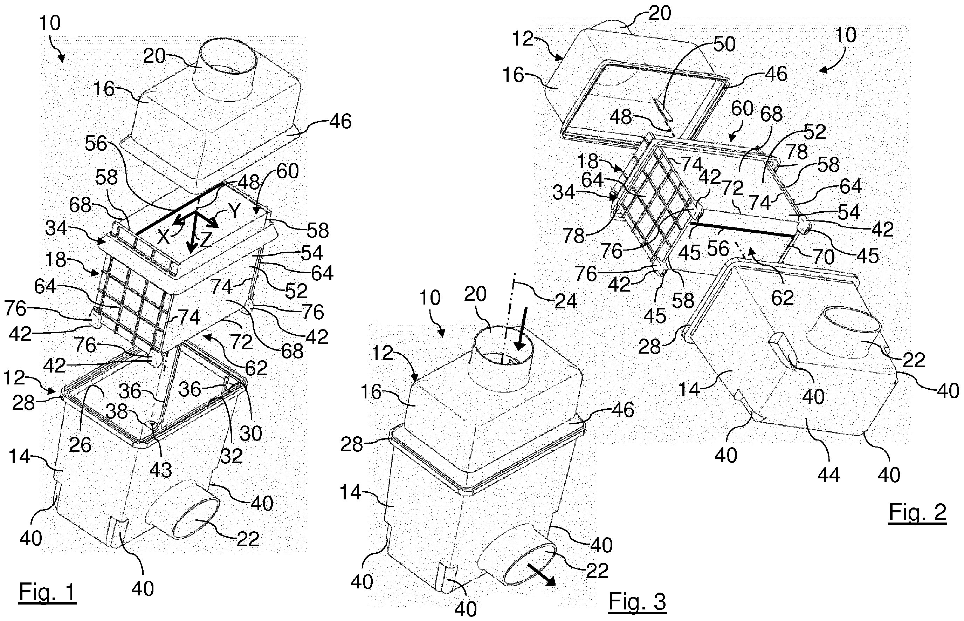

Die Darstellungen aus den Figuren 1 bis 13 sind nicht maßstabsgetreu. In den Figuren sind gleiche Bauteile mit gleichen Bezugszeichen versehen.

### Ausführungsform(en) der Erfindung

In den Figuren 1 bis 9 ist ein Luftfilter 10 einer Brennkraftmaschine eines Kraftfahrzeugs mit Merkmalen der beanspruchten Erfindung in unterschiedlichen Perspektiven und Schnitten gezeigt. Der Luftfilter 10 umfasst ein öffenbares Filtergehäuse 12, welches aus einem Gehäusetopf 14 und einem Gehäusedeckel 16 zusammengesetzt ist. In dem Filtergehäuse 12 ist ein Filterelement 18 austauschbar angeordnet.

Das Filtergehäuse 12 weist einen Einlass 20 für zu filtrierende Luft auf, der sich zentral im Gehäusedeckel 16 befindet. Ein Auslass 22 für filtrierte Luft befindet sich in einer Seitenwand des Gehäusetopfs 14.

Das Filtergehäuse 12 ist insgesamt etwa quaderförmig. Es ist in Richtung einer x-Achse des Filterelements 18 abgeflacht. In Richtung einer Gehäuseachse 24, welche sich durch den Gehäusetopf 14 und den Gehäusedeckel 16 erstreckt, ist das Filtergehäuse 12 langgestreckt. Die Gehäuseachse 24 verläuft in dem dargestellten Ausführungsbeispiel koaxial zu einer z-Achse des Filterelements 18. Die z-Achse des Filterelements 18 steht senkrecht auf der x-Achse. Eine Einbaurichtung des Filterelements 18 in den Gehäusetopf 14 verläuft bei dem dargestellten Ausführungsbeispiel axial zu der Gehäuseachse 24. Der Einlass 20 ist koaxial zur Gehäuseachse 24.

Der Gehäusetopf 14 weist an seiner dem Gehäusedeckel 16 zugewandten Seite eine Einbauöffnung 26 auf, welche mit dem Gehäusedeckel 16 verschlossen werden kann. Die Einbauöffnung 26 hat einen rechteckigen Querschnitt. Durch die Einbauöffnung 26 kann das Filterelement 18 in den Gehäusetopf 14 eingesteckt werden.

Die Einbauöffnung 26 ist von einem topfseitigen Montageflansch 28 umgeben, welcher sich an der Außenseite des Gehäusetopfs 14 bezüglich der Gehäuseachse 24 radial nach außen erstreckt. Der topfseitige Montageflansch 28 weist eine Dichtungsnut 30 auf, welche die Einbauöffnung 26 umfangsmäßig geschlossen umgibt und die auf der den Wänden des Gehäusetopfs 14 abgewandten Seite offen ist. Ein Boden der Dichtungsnut 30 bildet eine Dichtungsfläche 32, an der bei geschlossenem Luftfilter 10 eine Dichtung 34 des Filterelements 18 dicht anliegt.

An den radial inneren Umfangsseiten der schmalen Seitenwände des Gehäusetopfs 14 sind zwei parallele Führungsstege 36 einstückig angeordnet. Die Führungsstege 36 erstrecken sich axial zur Gehäuseachse 24. Sie dienen beim Einbau der Führung des Filterelements 18 in dem Gehäusetopf 14.

An den der Einbauöffnung 26 abgewandten Enden der Führungsstege 36 befindet sich jeweils eine Lagerfläche 38 von entsprechenden Stützlagern 40. An den Lagerflächen 38 kann sich bei eingebautem Filterelement 18 jeweils ein Abstützelement 42 des Filterelements 18 axial bezüglich der Gehäuseachse 24 abstützen.

An den Lagerflächen 38 ist zentrisch jeweils eine Positioniernoppe 43 angeordnet, welche sich parallel zur Gehäuseachse 24 erstrecken. Die Positioniernoppen 43 greifen bei eingebautem Filterelement 18 in entsprechende Positionieraufnahmen 45 in den Stirnseiten der Abstützelemente 42 ein.

Die Stützlager 40 sind als Einbuchtungen an den längsseitigen, bezüglich der Gehäuseachse 24 axialen Kanten des Gehäusetopfs 14 realisiert. Die Stützlager 40 erstrecken sich jeweils radial und axial bezüglich der Gehäuseachse 24. Die Stützlager 40 enden von einem Topfboden 44 des Gehäusetopfs 14 aus axial zur Gehäuseachse 24 betrachtet vor einer von dem Topfboden 44 abgewandten Umfangsseite des Auslasses 22.

Der Gehäusetopf 14 verjüngt sich sowohl in Richtung der x-Achse als auch in Richtung einer y-Achse des Filterelements 18 von der Einbauöffnung 26 zum Topfboden 44 hin. Die y-Achse steht senkrecht auf der x-Achse und senkrecht auf der z-Achse.

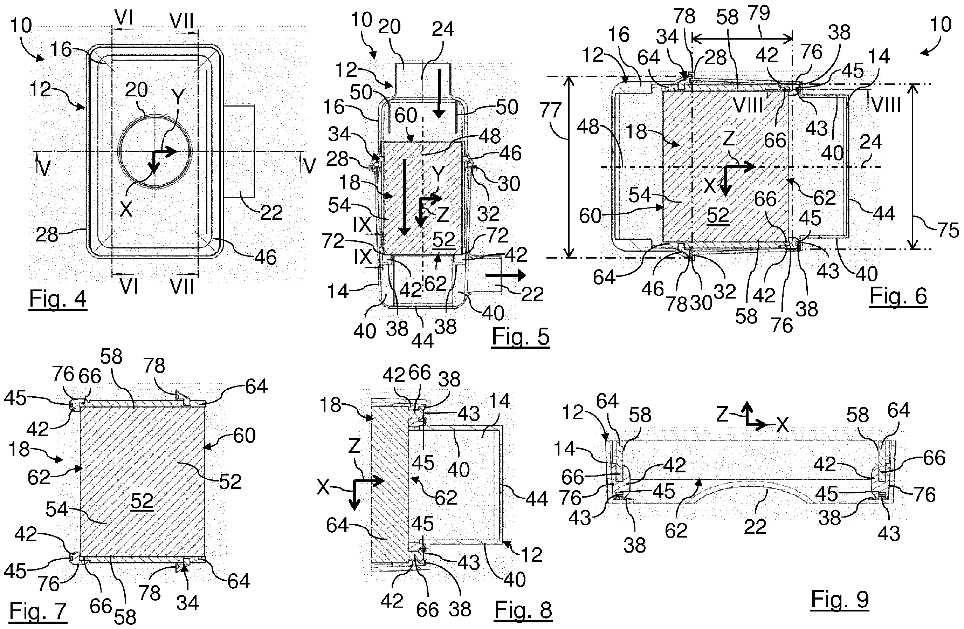

Der Gehäusedeckel 16 weist einen deckelseitigen Montageflansch 46 auf, welcher die Gehäuseachse 24 umfangsmäßig umgibt. Bei montiertem Filtergehäuse 12 greift, wie in den Figuren 5 und 6 gezeigt, ein bezüglich der Gehäuseachse 24 radial äußerer Rand des deckelseitigen Montageflanschs 46 in die Dichtungsnut 30 ein. Auf diese Weise wird die Dichtung 34 zwischen dem deckelseitigen Montageflansch 46 und dem topfseitigen Montageflansch 28 dicht eingeklemmt. Die Dichtung 34 hat einen bezüglich einer Elementachse 48 des Filterelements 18 schrägen, etwa schirmförmigen, Verlauf. Die Elementachse 48 verläuft in Richtung der z-Achse des Filterelements 18. Die Elementachse 48 fällt in dem gezeigten Ausführungsbeispiel bei eingebautem Filterelement 18 mit der Gehäuseachse 34 zusammen.

An den Innenseiten der schmalen Querwände des Gehäusedeckels 16 sind jeweils einstückig zwei Versteifungsrippen 50 angeordnet, die in den Figuren 2 und 5 gezeigt sind.

Das Filterelement 18 ist als Flachfilterelement ausgelegt. Das Filterelement 18 umfasst einen etwa quaderförmigen Filterbalg 52 aus einem zickzackförmig gefalteten Filtermedium 54. Bei dem Filtermedium 54 kann es sich um Filterpapier, Filtervlies oder ein anderes faltbares, zur Filtrierung von Luft geeignetes Filtermedium handeln. Der Filterbalg 52 kann auch aus einem ungefalteten Filtermedium, beispielsweise einem Filterschaum oder einem gewickelten Filtermedium, sein. Das Filtermedium 54 ist entlang von Faltkanten 56 gefaltet. Die Faltkanten 56 verlaufen parallel zueinander und parallel zur x-Achse des Filterelements 18.

Eine der anströmseitigen Faltkanten 56 ist beispielhaft in der Figur 1 gezeigt. In der Figur 2 ist eine der abströmseitigen Faltkanten 56 gezeigt. Die Faltenhöhen des gefalteten Filtermediums 54 erstrecken sich axial zur Elementachse 48. Eine bezüglich der Elementachse 48 axiale Höhe des Filterbalgs 52 ist deutlich größer als die Breite des Filterbalgs 52 in Richtung der x-Achse und die Länge des Filterbalgs 52 in Richtung der y-Achse des Filterelements 18. Die Falten können daher als tief bezeichnet werden.

Stirnkantenseiten 58 werden durch Stirnkanten des Filterbalges 52 aufgespannt. Sie befinden sich auf bezüglich der Elementachse 48 gegenüberliegenden Seiten. Die Stirnkantenseiten 58 verlaufen parallel zueinander und parallel zu einer Ebene, die durch die y-Achse und die z-Achse aufgespannt wird.

Eine Anströmseite 60, in den Figuren 1 und 2 oben, wird durch die Faltkanten 56 auf der dem Gehäusedeckel 16 zugewandten Seite aufgespannt.

Eine Abströmseite 62, in den Figuren 1 und 2 unten, wird durch die Faltkanten 56 auf der dem Topfboden 44 des Gehäusetopfs 14 zugewandten Seite aufgespannt.

An den Stirnkantenseiten 58 des Filterbalgs 52 ist jeweils eine Endscheibe 64 dicht mit den dortigen Stirnkanten des Filtermediums 54 verbunden. Die Endscheiben 64 bestehen jeweils aus einem mit Kunststoff umspritzten Gitter. Die Endscheiben 64 sind rechteckig.

Die Dichtung 34 umgibt den Filterbalg 52 und die Endscheiben 64 bezüglich der Elementachse 48 umfangsmäßig geschlossen. Sie befindet sich etwas unterhalb der Anströmseite 60.

Die Endscheiben 64 weisen jeweils zwei Aufsteckvorsprünge 66 auf. Die Aufsteckvorsprünge 66 befinden sich an den der Abströmseite 62 zugewandten Rändern neben den dortigen Ecken der Endscheiben 64. Einige der Aufsteckvorsprünge 66 sind in den Figuren 6 bis 8 im Schnitt gezeigt sind. Die Aufsteckvorsprünge 66 erstrecken sich jeweils axial bezüglich der Elementachse 48 von der Abströmseite 62 des Filterbalgs 52 weg. Die Aufsteckvorsprünge 66 sind einstückig mit den Endscheiben 64 verbunden.

Auf die Aufsteckvorsprünge 66 ist jeweils eines der Abstützelemente 42 aufgesteckt. Die Abstützelemente 42 sind aus einem elastischen Material, beispielsweise Gummi oder Elastomer. Die Abstützelemente 42 befinden sich auf der der Dichtung 34 bezüglich der Elementachse 48 axial gegenüberliegenden Abströmseite 62. Sie sind an den vier Ecken der Abströmseite 62 des Filterbalgs 52 angeordnet. Die Abstützelemente 42 befinden sich somit jeweils an einer ersten Kante 70, die von einer der Stirnkantenseiten 58 und der Abströmseite 62 gebildet wird. Ferner befindet sich jedes Abstützelement 42 an einer zweiten Kante 72, welche durch eine entsprechende Frontseite 68 des Filterbalges 52 und die Abströmseite 62 gebildet wird. Die Frontseiten 68 erstrecken sich jeweils zwischen den beiden Stirnkantenseiten 58 einerseits und der Anströmseite 60 und der Abströmseite 62 andererseits. Die Frontseiten 68 werden jeweils durch Stirnfalten des Filterbalges 52 gebildet. Außerdem befindet sich jedes Abstützelement 42 an einer dritten Kante 74 des Filterbalgs 52, welche durch die entsprechende Frontseite 68 und die entsprechende Stirnkantenseite 58 gebildet wird. Die drei Kanten 70, 72 und 74 treffen sich in den Ecken.

Die Abstützelemente 42 überragen die jeweilige Stirnkantenseite 58 des Filterbalgs 52 axial bezüglich der Elementachse 48. Ferner überragen die Abstützelemente 42 die jeweilige Stirnkantenseite 58 axial bezüglich der y-Achse. Außerdem überragen die Abstützelemente 42 jeweilige Frontseite 68 axial bezüglich der x-Achse. Insgesamt überragen die Abstützelemente 42 den Filterbalg 52 axial und radial bezüglich der Elementachse 48.

Bei korrekt montiertem Filterelement 18 stützt sich jedes der Abstützelemente 42 axial zur Gehäuseachse 24 und zur Elementachse 48 auf der entsprechenden Lagerfläche 38 der Stützlager 40 ab. Ferner stützt sich jedes Abstützelement 42 an der entsprechenden längsseitigen Seitenwand des Gehäusetopfs 14 axial zur y-Achse des Filterelements 18 ab. Im Übrigen stützt sich jedes Abstützelement 42 an der entsprechenden querseitigen Seitenwand des Gehäusetopfs 14 axial zur x-Achse ab.

Ein in der Figur 6 gezeigter Abstützabstand 75 axial zur x-Achse von stirnkantenseitigen äußeren Abstützabschnitten 76 der beiden Abstützelemente 42, die sich bezüglich einer durch die y-Achse und die z-Achse aufgespannten Ebene gegenüberliegen, ist jeweils kleiner als ein Dichtabstand 77 axial zur x-Achse von stirnkantenseitigen Dichtabschnitten 78 der Dichtung 34. Der Abstützabstand 75 entspricht etwa dem Dichtabstand 77 abzüglich zwischen etwa 2 % und 5 %, vorzugsweise 3,5 %, eines bezüglich der Elementachse 48 axialen Abstands 79 zwischen den stirnkantenseitigen äußeren Abstützabschnitten 76 und den entsprechenden stirnkantenseitigen Dichtabschnitten 78.

Zum Einbau wird das Filterelement 18 mit der Anströmseite 62 voran axial zur Elementachse 48 und zur Gehäuseachse 24 durch die Einbauöffnung 26 in den Gehäusetopf 14 gesteckt. Dabei wird das Filterelement 18 mit den Endscheiben 64 entlang der Führungsstege 36 geführt.

Bei korrekt montiertem Filterelement 18 liegen die bezüglich der Elementachse 48 vorderen Seiten der Abstützelemente 42 an den Lagerflächen 38 der Stützlager 40 an. Die Positioniernoppen 43 stecken in den entsprechenden Positionieraufnahmen 45. Die stirnkantenseitigen äußeren Abstützabschnitte 76 und entsprechende frontseitige Abstützabschnitte der Abstützelemente 42 liegen an den entsprechenden Seitenwänden des Filtergehäusetopfs 14 an.

Die Dichtung 34 ragt in die Dichtungsnut 30 des Gehäusetopfs 14. Das Filterelement 18 hängt an der Dichtung 34 in dem Gehäusetopf 14. Die stirnkantenseitigen Dichtabschnitte 78 und die frontseitigen Dichtabschnitte der Dichtung 34 liegen dabei an der Dichtungsfläche 32 der Dichtungsnut 30 an.

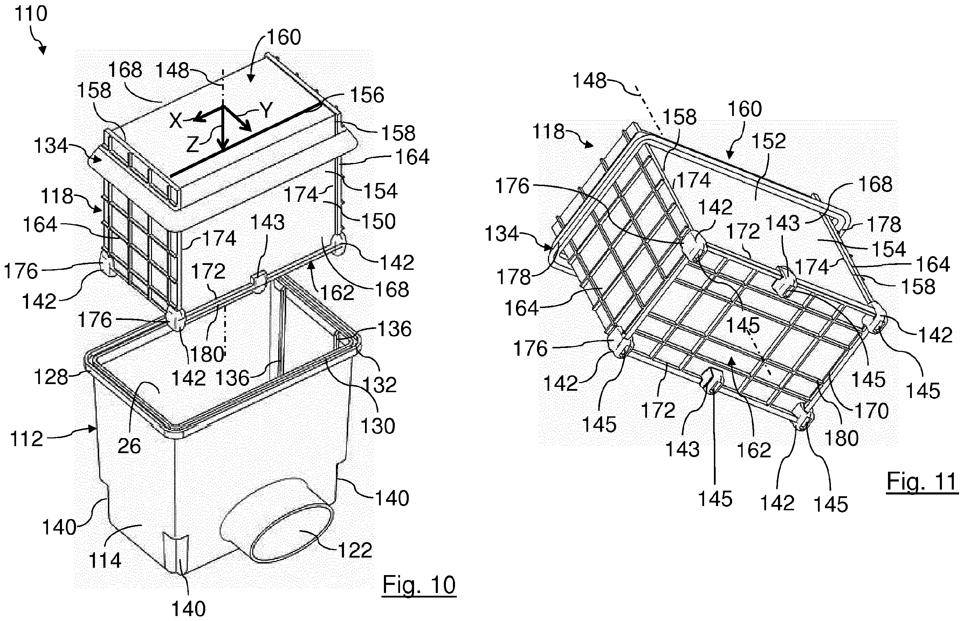

In den Figuren 10 bis 12 ist ein zweites Ausführungsbeispiel eines Luftfilters 110 gezeigt. Diejenigen Elemente, die zu denen des ersten Ausführungsbeispiels aus 1 bis 9 ähnlich sind, sind mit denselben Bezugszeichen zuzüglich 100 versehen.

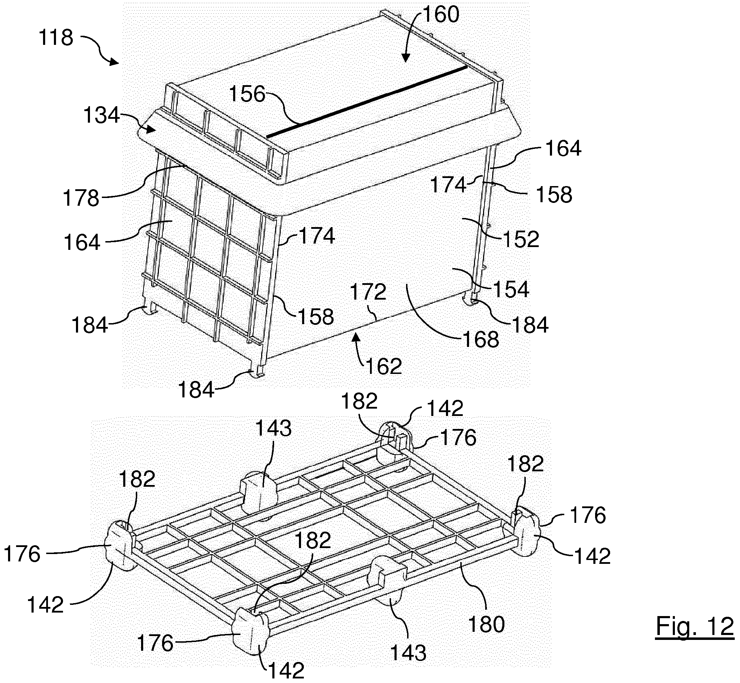

Im Unterschied zu dem ersten Ausführungsbeispiel sind bei dem zweiten Ausführungsbeispiel die Abstützelemente 142 nicht direkt an den Endscheiben 164 befestigt. Sie sind an einem Trägergitter 180 befestigt, welches mit den Endscheiben 164 verbunden ist. In der Figur 12 ist das Trägergitter 180 im Detail gezeigt. Das Trägergitter 180 ist für Luft durchlässig. Es befindet sich an der Abströmseite 162 des Filterbalgs 142. Es deckt die Abströmseite 162 vollständig ab.

Auf seiner dem Filterbalg 152 zugewandten Seite weist das Trägergitter 180 an seinen Ecken jeweils eine Rastaufnahme 182 auf. Entsprechend weisen die Endscheiben 164 an ihren dem Trägergitter 180 zugewandten Ecken jeweils einen Raststift 184 auf. Die Raststifte 184 haben jeweils ein als Rasthaken ausgebildetes, pfeilförmiges freies Ende. Zur Verbindung des Trägergitters 180 mit den Endscheiben 164 werden die Raststifte 184 in die Rastaufnahmen 182 gesteckt.

Die Abstützelemente 142 sind fest an den Ecken des Trägergitters 180 angeordnet. Ihre Ausdehnungen und ihre Abstützfunktionen entsprechen den Abstützelementen 42 aus dem ersten Ausführungsbeispiel.

Darüber hinaus sind an den frontseitigen Rändern des Trägergitters 180 zwei frontseitige Zwischenabstützelemente 143 angeordnet. Die Zwischenabstützelemente 143 befinden sich bei montiertem Trägergitter 180 jeweils an den Kanten 172 zwischen den Frontseiten 168 und der Abströmseite 162 des Filterbalgs 152. Die Zwischenabstützelemente 143 überragen jeweils die entsprechende Frontseite 168 des Filterbalgs 152 in axialer Richtung bezüglich der Elementachse 148, also in Richtung der z-Achse. Das Trägergitter 180 mit den Zwischenabstützelementen 143 überragt die Abströmseite 162 auf beiden Frontseiten 168 jeweils in Richtung der y-Achse.

Die Abstützelemente 142 und die Zwischenabstützelemente 143 sind aus einem elastischen Material an das Trägergitter 180 angeformt oder angespritzt. Sie können alternativ auch einstückig aus diesem gebildet sein. Es können auch entsprechende Aufsteckvorsprünge am Trägergitter 180 vorgesehen sein, auf die die Abstützelement 142 und/oder die Zwischenabstützelemente 143 ähnlich wie beim ersten Ausführungsbeispiel aufgesteckt sein können.

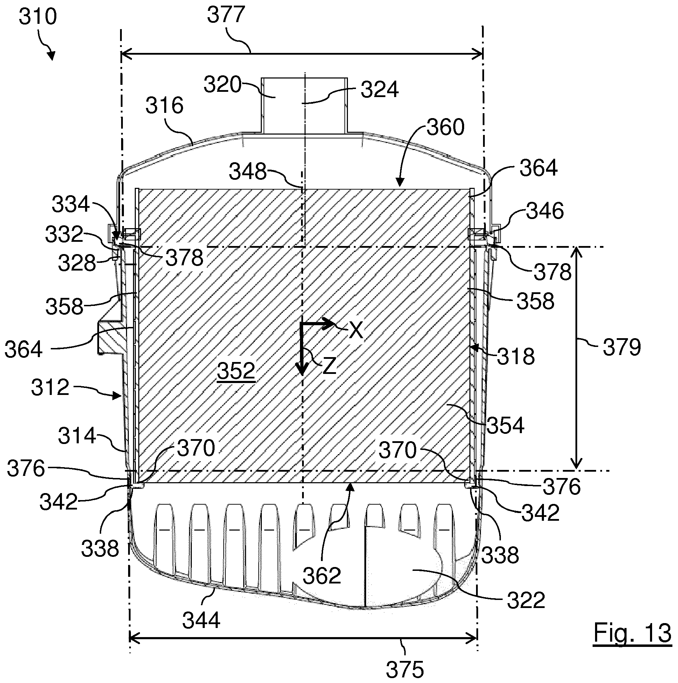

In der Figur 13 ist ein längsseitiger Längsschnitt eines Luftfilters 310 gemäß einem vierten Ausführungsbeispiel gezeigt. Diejenigen Elemente, die zu denen des ersten Ausführungsbeispiels aus den Figuren 1 bis 9 ähnlich sind, sind mit denselben Bezugszeichen zuzüglich 300 versehen.

## Patentansprüche

1. Filterelement (18; 118; 318), insbesondere Flachfilterelement, insbesondere eines Luftfilters (10; 110; 310), insbesondere einer Brennkraftmaschine, insbesondere eines Kraftfahrzeugs, mit einem Filterbalg (52; 152; 352), der die Form eines Polyeders hat, wobei an dem Filterbalg (52; 152; 352) wenigstens ein Abstützelement (42; 142, 143; 342) angeordnet ist zum Abstützen des Filterelements (18; 118; 318) gegen ein Filtergehäuse (12; 112; 312), in dem das Filterelement (18; 118; 318) angeordnet werden kann, und mit einer bezüglich einer Elementachse (48; 148; 348) umfangsmäßig verlaufenden Dichtung (34; 134; 334) zum Abdichten gegen das Filtergehäuse (12; 112; 312), wobei das wenigstens eine Abstützelement (42; 142, 143; 342) getrennt von der Dichtung (34; 134; 334) ausgebildet ist, und wobei das wenigstens eine Abstützelement (42; 142, 143; 342) an wenigstens einer Kante (70, 72, 74; 170, 172, 174; 370) des Filterbalges (52; 152; 352) angeordnet ist und den Filterbalg (52; 152; 352) außen überragt, **dadurch gekennzeichnet, dass** das wenigstens eine Abstützelement (42; 142, 143; 342) den Filterbalg (52; 152; 352) in einer bezüglich der Elementachse (48; 148; 348) axialen und radialen Richtung überragt und an einer der Dichtung (34; 134; 334) bezüglich der Elementachse (48; 148; 348) axial gegenüberliegenden Seite (62; 162; 362) des Filterbalges (52; 152; 352) an einer Ecke des Filterbalges angeordnet ist, sodass das wenigstens eine Abstützelement (42; 142, 143; 342) mehrere Kanten des Filterbalgs (52; 152; 352), die sich in der Ecke treffen, schützt.

2. Filterelement nach Anspruch 1, **dadurch gekennzeichnet, dass** das wenigstens eine Abstützelement (42; 142, 143; 342) direkt und/oder indirekt an dem Filterbalg (52; 152; 352) lösbar oder unlösbar befestigt ist.

3. Filterelement nach einem der vorigen Ansprüche, **dadurch gekennzeichnet, dass** das wenigstens eine Abstützelement (42; 142; 342) alle an die Ecke angrenzenden Seiten (58, 62, 68; 158, 162, 168; 358) des Filterbalges (52; 152; 352) überragt.

4. Filterelement nach einem der vorigen Ansprüche, **dadurch gekennzeichnet, dass** wenigstens ein Verbindungskörper, insbesondere ein Endkörper (64; 164; 264; 364), wenigstens entlang der wenigstens einen Kante (70, 74; 170, 174; 370) mit dem Filterbalg (52; 152; 352) verbunden ist und das wenigstens eine Abstützelement (42; 142, 143; 342) an dem wenigstens einen Verbindungskörper (64; 164; 364) direkt und/oder indirekt befestigt ist.

5. Filterelement nach einem der vorigen Ansprüche, **dadurch gekennzeichnet, dass** das wenigstens eine Abstützelement (142, 143) an einem Trägerkörper, insbesondere einem Trägergitter (180), befestigt ist, der mit dem wenigstens einen Verbindungskörper (164) verbunden oder verbindbar ist.

6. Filterelement nach einem der vorigen Ansprüche, **dadurch gekennzeichnet, dass** der Trägerkörper (180) mittels einer steckbaren Verbindung, insbesondere einer Rastverbindung (182, 184), mit dem wenigstens einen Verbindungskörper (164) verbunden ist.

7. Filterelement nach einem der vorigen Ansprüche, **dadurch gekennzeichnet, dass** ein Abstützabstand (75; 375) in einer ersten radialen Ebene quer, insbesondere senkrecht, zur Elementachse (48; 348) zwischen radial äußeren Abstützabschnitten (76; 376) von zwei bezüglich einer axialen Ebene, in der die Elementachse (48; 348) liegt, gegenüberliegenden Abstützelementen (42; 342), die sich bei eingebautem Filterelement (18; 318) radial zur Elementachse oder zu einer zur Elementachse (48; 348) parallelen Achse gegen das Filtergehäuse (12; 312) abstützen können, kleiner ist als ein Dichtabstand (77; 377) in einer zweiten, zur ersten radialen Ebene parallelen radialen Ebene zwischen zwei bezüglich der in der axialen Ebene gegenüberliegenden Dichtabschnitten (78; 378) der Dichtung (34; 334), die bei eingebautem Filterelement (18; 318) gegen entsprechende Dichtungsflächen (32; 332) des Filtergehäuses (12; 312) abdichten können.

8. Luftfilter (10; 110; 310), insbesondere einer Brennkraftmaschine, insbesondere eines Kraftfahrzeugs, mit einem Filtergehäuse (12; 112; 312), das einen Gehäuseinnenraum, wenigstens einen Einlass (20; 120; 320) für zu reinigende Luft und wenigstens einen Auslass (22; 122; 322) für gereinigte Luft aufweist, und in dem Gehäuseinnenraum ein Filterelement, insbesondere ein erfindungsgemäßes Filterelement (18; 118; 318), so angeordnet ist, dass es den wenigstens einen Einlass (20; 120; 320) von dem wenigstens einen Auslass (22; 122; 322) trennt, wobei das Filterelement (18; 118; 318) einen Filterbalg (52; 152; 352) umfasst, der die Form eines Polyeders hat, wobei an dem Filterbalg (52; 152; 352) wenigstens ein Abstützelement (42; 142, 143; 342) angeordnet ist zum Abstützen des Filterelements (18; 118; 318) gegen das Filtergehäuse (12; 112; 312), wobei das Filterelement (18; 118; 318) ferner eine einer bezüglich einer Elementachse (48; 148; 348) umfangsmäßig verlaufende Dichtung (34; 134; 334) zum Abdichten gegen das Filtergehäuse (12; 112; 312) aufweist, wobei das wenigstens eine Abstützelement (42; 142, 143; 342) getrennt von der Dichtung (34; 134; 334) des Filterelements (18; 118; 318) ausgebildet ist, wobei das wenigstens eine Abstützelement (42; 142, 143; 342) an wenigstens einer Kante (70, 72, 74; 170, 172, 174; 370) des Filterbalges (52; 152; 352) angeordnet ist und den Filterbalg (52; 152; 352) außen überragt, **dadurch gekennzeichnet, dass** das wenigstens eine Abstützelement (42; 142, 143; 342) den Filterbalg (52; 152; 352) in einer bezüglich der Elementachse (48; 148; 348) axialen und radialen Richtung überragt und an einer der Dichtung (34; 134; 334) bezüglich der Elementachse (48; 148; 348) axial gegenüberliegenden Seite (62; 162; 362) des Filterbalges (52; 152; 352) an einer Ecke des Filterbalges angeordnet ist, sodass das wenigstens eine Abstützelement (42; 142, 143; 342) mehrere Kanten des Filterbalgs (52; 152; 352), die sich in der Ecke treffen, schützt.

## Claims

1. A filter element (18; 118; 318), in particular a flat filter element, in particular of an air filter (10; 110; 310), in particular of an internal combustion engine, in particular of a motor vehicle, having a filter bellows (52; 152; 352) which has the shape of a polyhedron, wherein at least one support element (42; 142, 143; 342) is disposed on the filter bellows (52; 152; 352) for supporting the filter element (18; 118; 318) against a filter housing (12; 112; 312) in which the filter element (18; 118; 318) can be disposed, and having a seal (34; 134; 334) extending circumferentially with respect to an element axis (48; 148; 348) for sealing against the filter housing (12; 112; 312), wherein the at least one support element (42; 142, 143; 342) is designed separately from the seal (34; 134; 334), and wherein the at least one support element (42; 142, 143; 342) is disposed on at least one edge (70, 72, 74; 170, 172, 174; 370) of the filter bellows (52; 152; 352) and projects beyond the exterior of the filter bellows (52; 152; 352), **characterized in that** the at least one support element (42; 142, 143; 342) projects beyond the filter bellows (52; 152; 352) in an axial and radial direction with respect to the element axis (48; 148; 348) and is disposed on a side (62; 162; 362) of the filter bellows (52; 152; 352) axially opposing the seal (34; 134; 334) with respect to the element axis (48; 148; 348) at a corner of the filter bellows, so that the at least one support element (42; 142, 143; 342) protects a plurality of edges of the filter bellows (52; 152; 352) that meet in the corner.

2. The filter element according to claim 1, **characterized in that** the at least one support element (42; 142, 143; 342) is directly and/or indirectly attached to the filter bellows (52; 152; 352) in a detachable or non-detachable manner.

3. The filter element according to one of the preceding claims, **characterized in that** the at least one support element (42; 142; 342) projects beyond all sides (58, 62, 68; 158, 162, 168; 358) of the filter bellows (52; 152; 352) adjacent to the corner.

4. The filter element according to one of the preceding claims, **characterized in that** at least one connector body, in particular an end body (64; 164; 264; 364), is connected to the filter bellows (52; 152; 352) at least along the at least one edge (70, 74; 170, 174; 370) and the at least one support element (42; 142, 143; 342) is attached directly and/or indirectly to the at least one connector body (64; 164; 364).

5. The filter element according to one of the preceding claims, **characterized in that** the at least one support element (142, 143) is attached to a carrier body, in particular a carrier grid (180), which is connected or connectable to the at least one connector body (164).

6. The filter element according to one of the preceding claims, **characterized in that** the carrier body (180) is connected to the at least one connector body (164) using a pluggable connection, in particular a snap-in connection (182, 184).

7. The filter element according to one of the preceding claims, **characterized in that** a supporting distance (75; 375) in a first radial plane transverse, in particular perpendicular, to the element axis (48; 348) between radially outer supporting sections (76; 376) of two supporting elements (42; 342) which are located opposite one another with respect to an axial plane in which the element axis (48; 348) lies, which, when the filter element (18; 318) is installed, can be supported radially with respect to the element axis or with respect to an axis parallel to the element axis (48; 348) against the filter housing (12; 312), is smaller than a sealing distance (77; 377) in a second radial plane parallel to the first radial plane between two in the axial plane opposing sealing sections (78; 378) of the seal (34; 334) which, when the filter element (18; 318) is installed, can seal against corresponding sealing surfaces (32; 332) of the filter housing (12; 312).

8. An air filter (10; 110; 310), in particular of an internal combustion engine, in particular of a motor vehicle, having a filter housing (12; 112; 312) featuring a housing interior, at least one inlet (20; 120; 320) for air to be cleaned and at least one outlet (22; 122; 322) for cleaned air, and a filter element, in particular a filter element (18; 118; 318) according to the invention, is disposed in the housing interior in such a way that it separates the at least one inlet (20; 120; 320) from the at least one outlet (22; 122; 322), wherein the filter element (18; 118; 318) comprises a filter bellows (52; 152; 352) having the shape of a polyhedron, wherein at least one support element (42; 142, 143; 342) is disposed on the filter bellows (52; 152; 352) for supporting the filter element (18; 118; 318) against the filter housing (12; 112; 312), wherein the filter element (18; 118; 318) furthermore features a seal (34; 134; 334) extending circumferentially with respect to an element axis (48; 148; 348) for sealing against the filter housing (12; 112; 312), wherein the at least one support element (42; 142, 143; 342) is designed separately from the seal (34; 134; 334) of the filter element (18; 118; 318), wherein the at least one support element (42; 142, 143; 342) is disposed on at least one edge (70, 72, 74; 170, 172, 174; 370) of the filter bellows (52; 152; 352) and projects beyond the exterior of the filter bellows (52; 152; 352), **characterized in that** the at least one support element (42; 142, 143; 342) projects beyond the filter bellows (52; 152; 352) in an axial and radial direction with respect to the element axis (48; 148; 348) and is disposed on a side (62; 162; 362) of the filter bellows (52; 152; 352) axially opposing the seal (34; 134; 334) with respect to the element axis (48; 148; 348) at a corner of the filter bellows, so that at least one support element (42; 142, 143; 342) protects a plurality of edges of the filter bellows (52; 152; 352) that meet in the corner.

## Revendications

1. Elément filtrant (18; 118; 318), notamment élément filtrant plat, notamment d'un filtre à air (10; 110; 310), notamment d'un moteur à combustion interne, notamment d'un véhicule automobile, ayant un soufflet de filtre (52; 152; 352) qui a la forme d'un polyèdre, dans lequel au moins un élément de support (42; 142, 143; 342) est disposé sur le soufflet de filtre (52; 152; 352) pour supporter l'élément filtrant (18; 118; 318) contre un boîtier de filtre (12; 112; 312) dans lequel l'élément filtrant (18; 118; 318) peut être disposé, et ayant un joint d'étanchéité (34; 134; 334) s'étendant de manière périphérique par rapport à un axe de l'élément (48; 148; 348) pour assurer l'étanchéité contre le boîtier de filtre (12; 112; 312), dans lequel l'élément de support (42; 142, 143; 342), au moins au nombre d'un, est réalisé séparément du joint d'étanchéité (34; 134; 334), et dans lequel l'élément de support (42; 142, 143; 342), au moins au nombre d'un, est disposé sur au moins un bord (70, 72, 74; 170, 172, 174; 370) du soufflet de filtre (52; 152; 352) et dépasse extérieurement du soufflet de filtre (52; 152; 352), **caractérisé en ce que** l'élément de support (42; 142, 143; 342), au moins au nombre d'un, dépasse du soufflet de filtre (52; 152; 352) dans une direction axiale et radiale par rapport à l'axe de l'élément (48; 148; 348) et est disposé sur un côté (62; 162; 362) du soufflet de filtre (52; 152; 352) opposé axialement au joint d'étanchéité (34; 134; 334) par rapport à l'axe de l'élément (48; 148; 348) dans un coin du soufflet de filtre, de sorte que l'élément de support (42; 142, 143; 342), au moins au nombre d'un, sécurise plusieurs bords du soufflet de filtre (52; 152; 352) qui se rencontrent dans le coin.

2. Elément filtrant selon la revendication 1, **caractérisé en ce que** l'élément de support (42; 142, 143; 342), au moins au nombre d'un, est attaché directement et/ou indirectement au soufflet de filtre (52; 152; 352) de manière détachable ou non détachable.

3. Elément filtrant selon l'une quelconque des revendications précédentes, **caractérisé en ce que** l'élément de support (42; 142; 342), au moins au nombre d'un, dépasse de tous les côtés (58, 62, 68; 158, 162, 168; 358) du soufflet de filtre (52; 152; 352) adjacents au coin.

4. Elément filtrant selon l'une quelconque des revendications précédentes, **caractérisé en ce qu'**au moins un corps de liaison, notamment un élément d'extrémité (64; 164; 264; 364), est relié au soufflet de filtre (52; 152; 352) au moins le long du bord (70, 74; 170, 174; 370), au moins au nombre d'un, et l'élément de support (42; 142, 143; 342), au moins au nombre d'un, est fixé directement et/ou indirectement au corps de liaison (64; 164; 364), au moins au nombre d'un.

5. Elément filtrant selon l'une quelconque des revendications précédentes, **caractérisé en ce que** l'élément de support (142, 143), au moins au nombre d'un, est attaché à un corps de support, notamment une grille de support (180), qui est relié ou peut être relié au corps de liaison (164), au moins au nombre d'un.

6. Elément filtrant selon l'une quelconque des revendications précédentes, **caractérisé en ce que** le corps de support (180) est relié au corps de liaison (164), au moins au nombre d'un, par une liaison enfichable, notamment par une liaison par encliquetage (182, 184).

7. Elément filtrant selon l'une quelconque des revendications précédentes, **caractérisé en ce qu'**une distance d'appui (75; 375) dans un premier plan radial transversal, en particulier perpendiculaire, à l'axe de l'élément (48; 348) entre des sections d'appui (76; 376) radialement extérieures de deux éléments de support (42; 342) opposés par rapport à un plan axial dans lequel se trouve l'axe de l'élément (48; 348), qui, lorsque l'élément filtrant (18; 318) est installé, peuvent s'appuyer radialement à l'axe de l'élément ou à un axe de l'élément (48; 348) contre le boîtier de filtre (12; 312) est inférieure à une distance d'étanchéité (77; 377) dans un second plan radial parallèle au premier plan radial entre deux sections d'étanchéité (78; 378) du joint d'étanchéité (34; 334) opposées par rapport à l'axe dans le plan axial, qui peuvent assurer l'étanchéité contre des surfaces d'étanchéité (32; 332) correspondantes du boîtier de filtre (12; 312) lorsque l'élément filtrant (18; 318) est monté.

8. Filtre à air (10; 110; 310), notamment d'un moteur à combustion interne, notamment d'un véhicule automobile, ayant un boîtier de filtre (12; 112; 312) qui présente un espace intérieur de boîtier, au moins une entrée (20; 120; 320) pour l'air à purifier et au moins une sortie (22; 122; 322) pour l'air purifié, et un élément filtrant, notamment un élément filtrant (18; 118; 318) selon l'invention, est disposé dans l'espace intérieur de boîtier de manière à séparer l'entrée (20; 120; 320), au moins au nombre d'une, de la sortie (22; 122; 322), au moins au nombre d'une, dans lequel l'élément filtrant (18; 118; 318) comprend un soufflet de filtre (52; 152; 352) qui a la forme d'un polyèdre, dans lequel au moins un élément de support (42; 142, 143; 342) est disposé sur le soufflet de filtre (52; 152; 352) pour supporter l'élément filtrant (18; 118; 318) contre le boîtier de filtre (12; 112; 312), dans lequel l'élément filtrant (18; 118; 318) présente en outre un joint d'étanchéité (34; 134; 334) s'étendant de manière circonférentielle par rapport à un axe de l'élément (48; 148; 348) pour assurer l'étanchéité contre le boîtier de filtre (12; 112; 312), dans lequel l'élément de support (42; 142, 143; 342), au moins au nombre d'un, est réalisé séparément du joint d'étanchéité (34; 134; 334) de l'élément filtrant (18; 118; 318), dans lequel l'élément de support (42; 142, 143; 342), au moins au nombre d'un, est disposé sur au moins un bord (70, 72, 74; 170, 172, 174; 370) du soufflet de filtre (52; 152; 352) et dépasse extérieurement du soufflet de filtre (52; 152; 352), **caractérisé en ce que** l'élément de support (42; 142, 143; 342), au moins au nombre d'un, dépasse du soufflet de filtre (52; 152; 352) dans une direction axiale et radiale par rapport à l'axe de l'élément (48; 148; 348) et est disposé sur un côté (62; 162; 362) du soufflet de filtre (52; 152; 352) opposé axialement au joint d'étanchéité (34; 134; 334) par rapport à l'axe de l'élément (48; 148; 348), à un coin du soufflet de filtre, de sorte que l'élément de support (42; 142, 143; 342), au moins au nombre d'un, sécurise plusieurs bords du soufflet de filtre (52; 152; 352) qui se rencontrent dans le coin.
